# EUROPÄISCHE PATENTSCHRIFT

(11) **EP 2 928 757 B1**
(45) Veröffentlichungstag und Bekanntmachung des Hinweises auf die Patenterteilung: **28.02.2018**
(21) Anmeldenummer: 13795726.2
(22) Anmeldetag: 22.11.2013
(51) Int. Cl.: B62D 25/08

(54) **VERSTÄRKUNGSSTREBE**
REINFORCING STRUT
BARRE DE RENFORCEMENT

(30) Priorität: 07.12.2012 DE 102012222559
(43) Veröffentlichungstag der Anmeldung: 14.10.2015
(73) Patentinhaber: Bayerische Motoren Werke Aktiengesellschaft, 80809 München (DE)
(72) Erfinder: RIEDL, Wilhelm, 85276 Pfaffenhofen (DE)
(86) Internationale Anmeldenummer: PCT/EP2013/074474
(87) Internationale Veröffentlichungsnummer: WO 2014/086597

(56) Entgegenhaltungen:
- EP-A1- 2 014 501
- DE-A1-102004 062 489
- DE-B- 1 177 952
- JP-A- 2000 118 443
- US-A1- 2006 027 993

## Beschreibung

Die Erfindung betrifft eine Strebe zur Verstärkung einer Fahrzeugkarosserie und ein Frontendmodul für ein Fahrzeug.

Es ist im Stand der Technik allgemein bekannt, dass bei Kraftfahrzeugen zur Stabilisierung bzw. Verstärkung der Karosserie Verstärkungsstreben eingesetzt werden. Insbesondere werden solche Verstärkungsstreben innerhalb des Motorraumes verbaut, um die Verwindungssteifigkeit der Fahrzeugkarosserie in diesem Bereich zu erhöhen. Die Druckschrift DE 199 28 588 A1, DE102004062489 und DE1177952 zeigt dies beispielsweise. Die in der Druckschrift gezeigten Verstärkungsstreben verlaufen von einem mittleren sich unterhalb der Frontscheibe befindenden Bereich der Fahrzeugkarosserie zu den Federbeindomen. Dort sind die Verstärkungsstreben entweder an den Federbeindomen direkt oder an einer die Federbeindomen verbindenden Domstrebe befestigt.

Wie hieraus ersichtlich ist, werden verschiedene Streben zwischen Punkten der Fahrzeugkarosserie vorgesehen, um deren Steifigkeit zu erhöhen.

Wenn hohe Anforderungen an die Steifigkeit der Karosserie zu erfüllen sind, führt dies zur Montage einer Vielzahl von Streben und auch anderer Verstärkungselemente und damit zu einer Erhöhung des Gewichtes des Fahrzeuges und des Montageaufwandes.

Aufgabe der Erfindung ist es, eine Strebe zur Verstärkung einer Fahrzeugkarosserie zu schaffen, die es ermöglicht, die Fahrzeugkarosserie in Leichtbauweise gut zu verstärken.

Diese Aufgabe wird mit einer erfindungsgemäßen Strebe gemäß Anspruch 1 gelöst.

Grundgedanke der Erfindung ist es, eine Strebe zu schaffen, die einen derartigen Verlauf aufweist, dass die Strebe verschiedene Punkte des Fahrzeuges verbindet und gleichzeitig durch ihren spezifischen Verlauf verschiedene Teilfunktionen übernimmt.

Eine erfindungsgemäße Strebe zur Verstärkung der Fahrzeugkarosserie eines Fahrzeuges weist einen ersten Befestigungsabschnitt und einen zweiten Befestigungsabschnitt zur Befestigung der Strebe an der Fahrzeugkarosserie auf. Über den ersten und zweiten Befestigungsabschnitt wird die Strebe beispielsweise an seitlichen Stützträgern der Fahrzeugkarosserie befestigt.

Zwischen dem ersten und zweiten Befestigungsabschnitt liegen weitere Befestigungsabschnitte zur weiteren Befestigung der Strebe an verschiedenen Punkten des Fahrzeuges, wobei die Strebe zwischen dem ersten Befestigungsabschnitt und dem zweiten Befestigungsabschnitt einen Verlauf mit mindestens zwei Scheitelpunkten aufweist.

Dadurch, dass die Strebe mindestens zwei Scheitelpunkte aufweist, verläuft die Strebe an verschiedenen Abschnitten der Fahrzeugkarosserie bzw. an verschiedenen Punkten des Fahrzeuges und kann dort über die weiteren Befestigungsabschnitte befestigt werden. Hierdurch übernehmen die Strebe bzw. ihre Teilabschnitte verschiedene Funktionen bzw. Stabilitätsfunktionen, weshalb die Karosserie durch das Vorsehen der erfindungsgemäßen Strebe gut verstärkt ist.

Außerdem kann durch den spezifischen Verlauf der Strebe die Anzahl an zu verbauenden Stabilitätselementen, wie Streben und Schubfelder, verringert werden, was eine Gewichtseinsparung und Leichtbauweise ermöglicht.

Bei dem Verlauf der Strebe handelt es sich insbesondere um den Verlauf, den die Strebe im Einbauzustand - projiziert in eine X-Y Ebene - aufweist (X-Richtung entspricht der bestimmungsgemäßen Fahrtrichtung des Fahrzeuges; Y-Richtung entspricht der zu der Fahrtrichtung senkrechten Richtung, d.h. der Quer- bzw. Breitenrichtung).

Bevorzugt sind die weiteren Befestigungsabschnitte jeweils an einem der mindestens zwei Scheitelpunkte vorgesehen.

Weiterhin bevorzugt weist der Verlauf der Strebe drei Scheitelpunkte auf, an denen jeweils einer der weiteren Befestigungsabschnitte angeordnet ist. Hierdurch erhält der Verlauf der Strebe eine M- bzw. W-Form, wobei die Strebe zur Verstärkung der Fahrzeugkarosserie an den Scheitelpunkten an entsprechenden Punkten des Fahrzeuges befestigt werden kann.

Durch diese Ausbildung der Strebe können insbesondere verschiedene gewünschte Kraftflusspfade verwirklicht werden.

Beispielsweise bildet einer der drei Scheitelpunkte einen mittleren Scheitelpunkt, durch den eine Symmetrieachse der Strebe verläuft. Von dem mittleren Scheitelpunkt erstrecken sich erste Schenkelabschnitte jeweils in Richtung der verbleibenden Scheitelpunkte, und zweite Schenkelabschnitte erstrecken sich von den verbleibenden Scheitelpunkten zu dem ersten bzw. zweiten Befestigungsabschnitt.

Bevorzugt sind die ersten Schenkelabschnitte derart dimensioniert, dass der sich an dem mittleren Scheitelpunkt befindende weitere Befestigungsabschnitt an einem Frontendmodul des Fahrzeuges befestigt werden kann und die sich an den verbleibenden Scheitelpunkten befindenden weiteren Befestigungsabschnitte im Bereich von Federbeindomen des Fahrzeuges befestigt werden können.

Die zweiten Schenkelabschnitte sind bevorzugt derart dimensioniert, dass der erste Befestigungsabschnitt und der zweite Befestigungsabschnitt jeweils an einem seitlichen Stützträger der Fahrzeugkarosserie befestigt werden kann.

Durch diese Ausbildung der erfindungsgemäßen Strebe können Kräfte, die auf das Frontendmodul des Kraftfahrzeuges wirken, beispielsweise bei einem Unfall, über die ersten Schenkelabschnitte in Richtung der Federbeindome geleitet werden.

Die zweiten Schenkelabschnitte übernehmen bevorzugt die Funktion, die Fahrzeugkarosserie dahingehend zu verstärken, dass sie die Anforderungen bei einem Aufprall (Crash) mit geringer Überlappung erfüllt.

Folglich übernimmt die erfindungsgemäße Strebe mehrere Teilfunktionen, wobei es sich lediglich um ein einziges zu verbauendes Element handelt.

Zur weiteren Verbesserung der Krafteinleitung in die Fahrzeugkarosserie kann die erfindungsgemäße Strebe sich in den ersten Schenkelabschnitten zwischen dem mittleren Scheitelpunkt und den verbleibenden Scheitelpunkten befindende zusätzliche Befestigungsabschnitte aufweisen, über die die Strebe bestimmungsgemäß an einer die seitlichen Stützträger verbindenden Referenzstrebe befestigt werden kann.

Die Strebe ist beispielsweise aus einem den Verlauf festlegenden Grundkörper ausgebildet, wobei der erste und zweite Befestigungsabschnitt und die weiteren Befestigungsabschnitte in diesen Grundkörper integriert sind. Bevorzugt sind auch die zusätzlichen Befestigungsabschnitte in den Grundkörper integriert.

Hierdurch kann die gesamte Strebe einteilig ausgebildet werden.

Zur Verringerung des Gewichtes der erfindungsgemäßen Strebe ist der Grundkörper bevorzugt einteilig aus einem Faser-Kunststoff-Verbund-Werkstoff ausgebildet. Für diesen Werkstoff können beispielsweise Glasfasern verwendet werden, die in einen Kunststoff, beispielsweise einen duroplastischen Kunststoff (z.B. Polyesterharz UP oder Epoxidharz) oder auch in einen thermoplastischen Kunststoff (z.B. Polyamid) eingeschlossen werden.

Als Fasern können allerdings auch Kohlenstofffasern verwendet werden, die in eine Kunststoff-Matrix, beispielsweise aus Duromeren (Epoxidharz) oder Thermoplasten, eingebettet werden.

Beispielsweise wird die erfindungsgemäße Strebe in einem Resin-Transfer-Molding-Verfahren, kurz RTM, hergestellt.

Bevorzugt bildet die erfindungsgemäße Strebe auch einen Teil einer für ein Frontendmodul vorgesehenen erfindungsgemäßen Frontendkarosserie. Bei einem Frontendmodul handelt es sich um einen Aufbau, der bevorzugt Elemente wie Scheinwerfer, Kühlergrill etc. aufnimmt und während der Montage für den Abschluss des Frontbereiches des Fahrzeuges an die Fahrzeugkarosserie herangeführt und an dieser befestigt wird.

Eine erfindungsgemäße Frontendkarosserie weist die erfindungsgemäße Strebe auf, wobei diese bevorzugt mit dem sich an dem mittleren Scheitelpunkt befindenden weiteren Befestigungsabschnitt an einer vorderen Querverstrebung befestigt ist und über die weiteren Befestigungsabschnitte an bestimmten Punkten des Fahrzeuges befestigt werden kann.

Im Folgenden wird eine bevorzugte Ausführungsform der erfindungsgemäßen Strebe und einer erfindungsgemäßen Frontendkarosserie unter Bezug auf die beigefügten Zeichnungen erläutert.
**Fig. 1** zeigt eine Ausführungsform der erfindungsgemäßen Strebe in einer Ansicht von oben, d.h. aus einer Richtung senkrecht zu einer X-Y Ebene, wobei die X-Richtung die bestimmungsgemäße Fahrtrichtung des Fahrzeuges und die Y-Richtung die dazu quer verlaufende Richtung darstellt;
**Fig. 2** zeigt die erfindungsgemäße Strebe in einem Einbauzustand und eine erfindungsgemäße Frontendkarosserie.
**Fig. 3** zeigt einen Querschnitt der erfindungsgemäßen Strebe entlang der in Fig. 1 gezeigten Schnittlinie A-A;

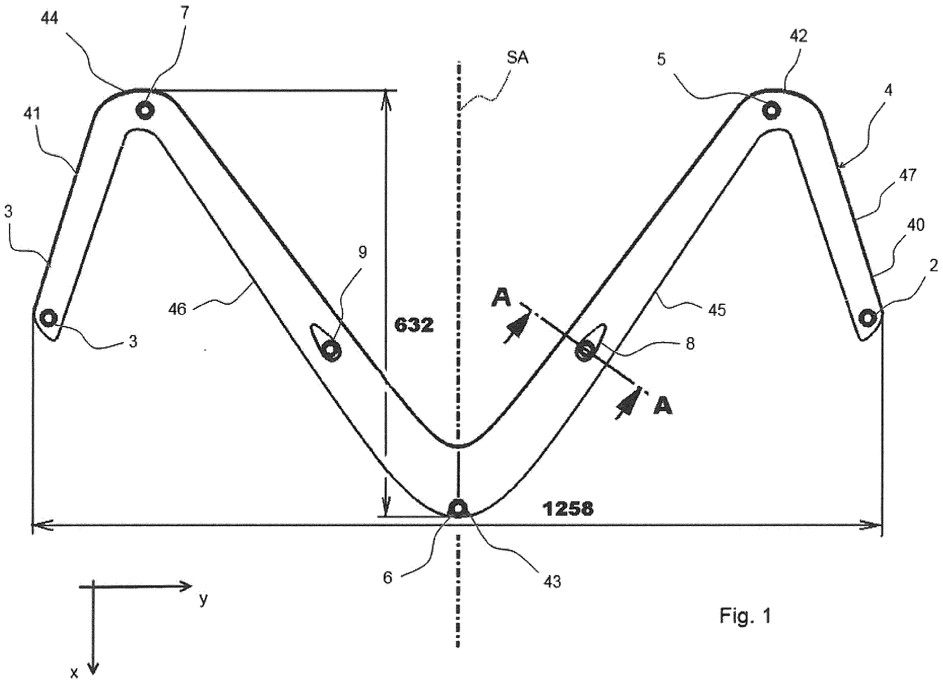

Fig. 1 zeigt eine bevorzugte Ausführungsform der erfindungsgemäßen Strebe 1.

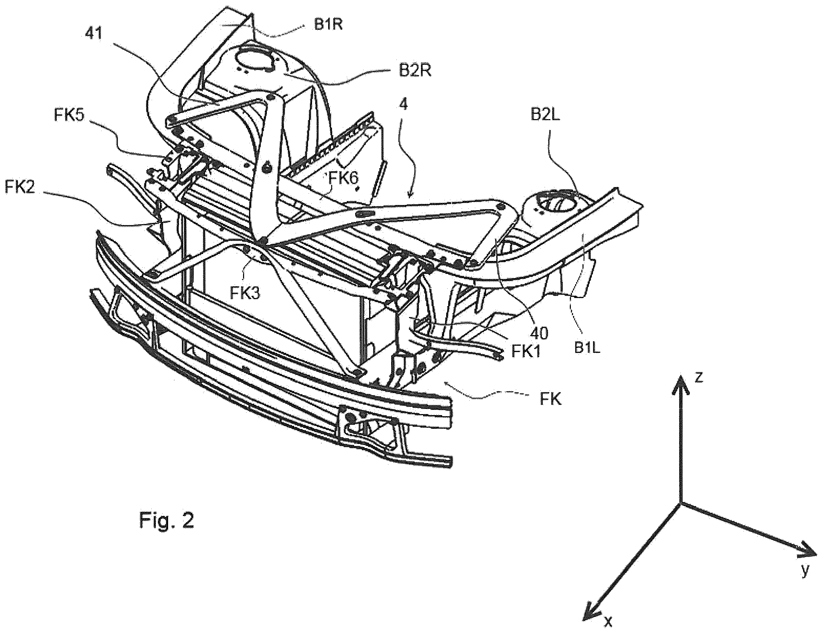

Fig. 2 zeigt diese Strebe 1 in einem Einbauzustand.

Unter wechselseitigem Bezug auf Fig. 1 und 2 werden im Folgenden die grundlegende Struktur der erfindungsgemäßen Strebe und der erfindungsgemäßen Frontendkarosserie beschrieben werden.

Die erfindungsgemäße Strebe weist einen Grundkörper 4 auf, der den Verlauf der Strebe 1 festlegt.

An in Längserstreckungsrichtung des Grundkörpers 4 liegenden Endbereichen 40, 41 befindet sich jeweils ein Befestigungsabschnitt 2, 3. In dem ersten Endbereich 40 der Strebe 1 ist ein erster Befestigungsabschnitt 2 und in dem zweiten Endabschnitt 41 der Strebe 1 ein zweiter Befestigungsabschnitt 3 ausgebildet.

Wie aus Fig. 2 ersichtlich ist, wird die erfindungsgemäße Strebe 1 über den ersten Befestigungsabschnitt 2 an einem linken Stützträger B1L befestigt und über den zweiten Befestigungsabschnitt 3 an einem rechten Stützträger B1R der Basiskarosserie B befestigt. Die Befestigung wird bevorzugt über eine lösbare Verbindung, beispielsweise eine Schraubverbindung, hergestellt.

Wie aus der Zusammenschau der Fig. 1 und 2 ersichtlich wird, bildet die in Fig. 1 gezeigte Ansicht eine dem Einbauzustand der Strebe 1 entsprechende Ansicht von oben.

Die in Fig. 1 und 2 gezeigte X-Richtung entspricht der Fahrtrichtung des mit der erfindungsgemäßen Strebe 1 ausgestatteten Fahrzeuges und die in den Figuren gezeigte Y-Richtung die hierzu quer verlaufende Breitenrichtung des Fahrzeuges. Letztendlich bildet die in Fig. 2 gezeigte Z-Richtung die Höhenrichtung des Fahrzeuges.

Das heißt, die in Fig. 1 gezeigte Darstellung zeigt den aus der Höhenrichtung gesehenen Verlauf der erfindungsgemäßen Strebe 1 - projiziert in die X-Y-Ebene. Wie aus Fig. 1 und 2 ersichtlich ist, weist der Grundkörper 4 bzw. die Strebe 1 insgesamt einen in dieser Ebene liegenden Verlauf mit mindestens zwei, in der Ausführungsform drei, Scheitelpunkten 42, 43, 44 auf. Anders ausgedrückt, besitzt die erfindungsgemäße Strebe 1 einen in der X-Y-Ebene liegenden M-förmigen bzw. W-förmigen Verlauf.

Aufgrund dieses Verlaufes des Grundkörpers 4 bzw. der Strebe 1 können verschiedene Abschnitte der Strebe 1 verschiedene Funktionen übernehmen.

Zwischen dem ersten Befestigungsabschnitt 2 und dem zweiten Befestigungsabschnitt 3 umfasst die Strebe 1 mehrere weitere und zusätzliche Befestigungsabschnitte.

An dem mittleren Scheitelpunkt 43 ist einer der weiteren Befestigungsabschnitte 6 ausgebildet, über den die Strebe 1 bestimmungsgemäß an einer in Fig. 2 gezeigten Frontendkarosserie FK befestigt wird. An den verbleibenden Scheitelpunkten 42, 44 befindet sich ebenfalls jeweils einer der weiteren Befestigungsabschnitte 5, 7, wobei die Strebe 1 bestimmungsgemäß über diese weiteren Befestigungsabschnitte 5, 7 in Bereichen der Federbeindome B2L und B2R befestigt wird.

Die in Fig. 2 gezeigte Frontendkarosserie FK bildet eine Grundstruktur für den Aufbau eines Frontendmoduls. Allgemein umfasst das fertige Frontendmodul Scheinwerfer, Blinker, Kühlergrill etc. und wird für den Abschluss des Frontbereiches des Fahrzeuges vormontiert. Während der Fertigung des Fahrzeuges wird das Frontendmodul an die Karosserie B des Fahrzeuges herangeführt und an dieser befestigt.

Die in Fig. 2 gezeigte Frontendkarosserie FK umfasst ein erstes seitliches Stützelement FK1 und ein zweites seitliches Stützelement FK2, die an ihren in Fahrtrichtung (X-Richtung) weisenden Ende über eine Querverstrebung FK3 verbunden sind. An den oberen hinteren Enden der seitlichen Stützelemente FK1, FK2, d.h. an den Enden, die in negative X-Richtung weisen, sind Befestigungselemente FK4, FK5 ausgebildet. Über diese Befestigungselemente FK4, FK5 - die auch als Schloss bezeichnet werden - kann die Frontendkarosserie FK bzw. das Frontendmodul an der Basiskarosserie B befestigt werden.

Die erfindungsgemäße Strebe 1 wird, wie aus Fig. 2 ersichtlich ist, über den mittleren Befestigungsabschnitt 6 an der die seitlichen Stützelemente FK1, FK2 verbindenden vorderen Querverstrebung FK3 befestigt. Die Befestigung erfolgt an einem in Y-Richtung, d.h. in Querrichtung bzw. Breitenrichtung des Fahrzeuges, liegenden mittleren bzw. zentralen Abschnitt der Querverstrebung FK3.

Die Strebe 1 ist bzgl. einer durch den mittleren Scheitelpunkt 43 verlaufenden Symmetrieachse SA achsensymmetrisch ausgebildet.

Wie in Fig. 1 und 2 gezeigt, erstrecken sich erste Schenkelabschnitte 45, 46 von dem mittleren Scheitelpunkt 43 in Richtung der verbleibenden Scheitelpunkte 42, 44. Hierdurch erhält die Strebe 1 einen V-förmigen Abschnitt, wobei die ersten Schenkelabschnitte 45, 46 in ihrer Erstreckungsrichtung derart dimensioniert sind, dass, wie in Fig. 2 gezeigt, die erfindungsgemäße Strebe 1 mit ihrem mittleren Befestigungsabschnitt 6 an der Querverstrebung FK3 der Frontendkarosserie FK und mit ihren weiteren Befestigungsabschnitten 5, 7 im Bereich der Federbeindome B2L, B2R befestigt werden kann. Die ersten Schenkelabschnitte 45, 46 übernehmen beispielsweise die Funktion, eine in negativer X-Richtung auf die Frontendkarosserie FK wirkende Kraft in Richtung der Federbeindome und damit in Richtung der seitlichen Stützträger B1L, B1R abzuleiten.

In den ersten Schenkelabschnitten 45, 46 sind außerdem bevorzugt zusätzliche Befestigungsabschnitte 8, 9 ausgebildet, über die die erfindungsgemäße Strebe 1 zusätzlich an einer in Fig. 2 gezeigten Referenzstrebe FK6 befestigt werden kann. Bei dieser Referenzstrebe FK6 handelt es sich um eine Referenz zur Ausrichtung des Frontendmoduls bzw. der Frontendkarosserie FK gegenüber der Basiskarosserie B. Die Referenzstrebe FK6 wird vor Befestigung bzw. Montage des Frontendmoduls an dem linken und rechten Stützträger B1L, B1R derart befestigt, dass sie beide Stützträger an ihren vorderen Enden verbindet. Während der Fertigung des Fahrzeuges wird das Frontendmodul an die Referenzstrebe FK6 herangeführt und an dieser ausgerichtet. Anschließend wird das Frontendmodul über die Schlösser FK4, FK5 an der Basiskarosserie B befestigt. Dadurch, dass die Strebe 1 über die zusätzlichen Befestigungsabschnitte 8, 9 an der Referenzstrebe FK6 befestigt werden kann, wird die Verwindungssteifigkeit der Karosserie zusätzlich verbessert.

Darüber hinaus übernimmt die Strebe 1 in dem Bereich zwischen der vorderen Querverstrebung FK3 und der Referenzstrebe FK6 die Funktion eines Schubfeldes (nicht gezeigt), das in diesem Bereich zur Verstärkung bzw. Stabilisierung vorgesehen werden müsste. Aufgrund der erfindungsgemäßen Ausgestaltung der Strebe 1 kann dieses Schubfeld weggelassen werden.

Von den verbleibenden Scheitelpunkten 42, 44 ausgehend verläuft die Strebe weiter in Richtung des ersten Befestigungsabschnittes 2 bzw. des zweiten Befestigungsabschnittes 3, die an den Endbereichen 40, 41 der Strebe 1 vorgesehen sind. Diese Abschnitte der Strebe 1 bilden zweite Schenkelabschnitte 47, 48 der Strebe 1.

Die zweiten Schenkelabschnitte 47, 48 sind derart dimensioniert, dass, wie in Fig. 2 gezeigt, der erste Befestigungsabschnitt 2 und der zweite Befestigungsabschnitt 3 jeweils an dem linken Stützträger B1L und B1R befestigt werden kann. Insoweit bilden die zweiten Schenkelabschnitte 47, 48 einen Kraftflusspfad zwischen dem linken Federbeindom B2L und dem linken Stützträger B1L bzw. dem rechten Federbeindom B2R und dem rechten Stützträger B1R. Hierdurch werden Kräfte, die auf den linken Stützträger B1L oder den rechten Stützträger B1R wirken, in Richtung des jeweiligen Federbeindomes geleitet. Die zweiten Schenkelabschnitte 47, 48 übernehmen die Funktion, dass die Karosserie die Anforderungen an einen Aufprall mit geringer Überdeckung erfüllt.

Wie sich aus der vorhergehenden Beschreibung ergibt, weist die erfindungsgemäße Strebe 1 verschiedene Funktionsbereiche auf, die jeweils bestimmte Teilfunktionen übernehmen.

Die in Fig. 1 gezeigten Abmaße entsprechen den bevorzugten, wobei die Abmaße in mm (Millimeter) angegeben sind.

Materialmäßig wird die erfindungsgemäße Strebe 1 bevorzugt aus einem Faser-Kunststoff-Verbund-Werkstoff hergestellt. Als Fasern können beispielsweise Glasfasern und/oder Kohlenstofffasern dienen. Als Kunststoffe kommen beispielsweise duroplastische oder thermoplastische Kunststoffe in Frage.

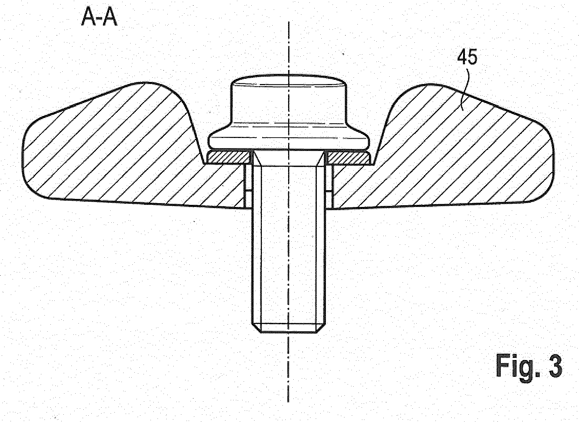

Fig. 3 zeigt einen schematischen Querschnitt der erfindungsgemäßen Strebe 1 entlang der in Fig. 1 gezeigten Schnittlinie A-A. Wie hieraus ersichtlich ist, ist der zusätzliche Befestigungsabschnitt 8 über einen in den Grundkörper 4 integrierten Einsatz verwirklicht. Durch diesen Einsatz hindurch kann ein Befestigungsmittel, beispielsweise eine Schraube, geführt und an der Referenzstrebe FK6 befestigt werden. Die anderen Befestigungsabschnitte sind auf äquivalente Weise verwirklicht.

Wie es aus der vorhergehenden Beschreibung verständlich wird, kann eine Strebe 1 zur Verstärkung einer Fahrzeugkarosserie vorgesehen werden, die die Steifigkeit des Fahrzeuges allgemein verbessert.

## Patentansprüche

1. Strebe (1) zur Verstärkung einer Fahrzeugkarosserie eines Fahrzeuges, insbesondere eines Motorraumes, wobei die Strebe (1) aufweist:
einen ersten Befestigungsabschnitt (2) und einen zweiten Befestigungsabschnitt (3) zur Befestigung der Strebe (1) an der Fahrzeugkarosserie; und
zwischen dem ersten und zweiten Befestigungsabschnitt (2, 3) liegende weitere Befestigungsabschnitte (5, 6) zur weiteren Befestigung der Strebe (1) an Punkten des Fahrzeuges,
**dadurch gekennzeichnet dass**,
die Strebe (1) zwischen dem ersten Befestigungsabschnitt (2) und dem zweiten Befestigungsabschnitt (3) im Einbauzustand projiziert in eine X-Y-Ebene einen Verlauf mit mindestens zwei Scheitelpunkten (42, 43) aufweist.

2. Strebe gemäß Anspruch 1, wobei
die weiteren Befestigungsabschnitte (2, 3) sich jeweils an einem der mindestens zwei Scheitelpunkte (42, 43) befinden.

3. Strebe gemäß Anspruch 1 oder 2, wobei
der Verlauf der Strebe (1) drei Scheitelpunkte (42, 43, 44), an denen jeweils einer der weiteren Befestigungsabschnitte (5, 6, 7) angeordnet ist, aufweist.

4. Strebe gemäß Anspruch 3, wobei
einer der drei Scheitelpunkte (42, 43, 44) einen mittleren Scheitelpunkt (43) bildet, durch den eine Symmetrieachse der Strebe (1) verläuft,
sich erste Schenkelabschnitte (45, 46) von dem mittleren Scheitelpunkt (43) jeweils in Richtung der verbleibenden Scheitelpunkte (42, 44) erstrecken, und
sich zweite Schenkelabschnitte (47, 48) von den verbleibenden Scheitelpunkten (42, 44) zu dem ersten und zweiten Befestigungsabschnitt (2, 3) erstrecken.

5. Strebe gemäß Anspruch 4, wobei
die ersten Schenkelabschnitte (45, 46) derart dimensioniert sind, dass der sich an dem mittleren Scheitelpunkt (43) befindende weitere Befestigungsabschnitt (6) an einem Frontendmodul des Fahrzeuges befestigt werden kann und die sich an den verbleibenden Scheitelpunkten (42, 44) befindenden weiteren Befestigungsabschnitte (5, 7) im Bereich von Federbeindomen des Fahrzeuges befestigt werden können, und
die zweiten Schenkelabschnitte (47, 48) derart dimensioniert sind, dass der erste Befestigungsabschnitt (2) und der zweite Befestigungsabschnitt (3) jeweils an einem seitlichen Stützträger der Fahrzeugkarosserie befestigt werden kann.

6. Strebe gemäß Anspruch 5, wobei
sich in den ersten Schenkelabschnitten (45, 46) zwischen dem mittleren Scheitelpunkt (43) und den verbleibenden Scheitelpunkten (42, 44) zusätzliche Befestigungsabschnitte (8, 9) befinden, über die die Strebe (1) bestimmungsgemäß an einer die seitlichen Stützträger verbindenden Referenzstrebe befestigt werden kann.

7. Strebe gemäß einem der Ansprüche 2 bis 5, wobei
die Strebe (1) aus einem den Verlauf festlegenden Grundkörper (4), in den der erste und zweite Befestigungsabschnitt (2, 3) und die weiteren Befestigungsabschnitte integriert sind, ausgebildet ist.

8. Strebe gemäß Anspruch 6, wobei
die Strebe (1) aus einem den Verlauf festlegenden Grundkörper (4), in den der erste und zweite Befestigungsabschnitt (2, 3), die weiteren Befestigungsabschnitte und die zusätzlichen Befestigungsabschnitte integriert sind, ausgebildet ist.

9. Strebe gemäß Anspruch 7 oder 8, wobei
der Grundkörper (4) einteilig aus einem Faser-Kunststoff-Verbund-Werkstoff gebildet ist.

10. Frontendmodul für ein Fahrzeug aufweisend
eine Strebe (1) gemäß einem der Ansprüche 4 bis 9, wobei
die Strebe (1) mit dem sich an dem mittleren Scheitelpunkt (43) befindenden weiteren Befestigungsabschnitt (6) an einer vorderen Querverstrebung befestigt ist und über die weiteren Befestigungsabschnitte an Punkten des Fahrzeuges befestigt werden kann.

## Claims

1. A strut (1) for reinforcing a vehicle body of a vehicle, especially of an engine compartment, wherein the strut (1) has:
a first fastening portion (2) and a second fastening portion (3) for fastening the strut (1) to the vehicle body; and
further fastening portions (5, 6) located between the first and second fastening portion (2, 3) for further fastening the strut (1) to points of the vehicle, **characterised in that**
the strut (1) between the first fastening portion (2) and the second fastening portion (3) in the installed state projects onto an X-Y plane a profile with at least two vertices (42, 43).

2. A strut according to Claim 1, wherein
the further fastening portions (2, 3) are located in each case at one of the at least two vertices (42, 43).

3. A strut according to Claim 1 or Claim 2, wherein
the profile of the strut (1) has three vertices (42, 43, 44), at each of which one of the further fastening portions (5, 6, 7) is arranged.

4. A strut according to Claim 3, wherein
one of the three vertices (42, 43, 44) forms a middle vertex (43) through which an axis of symmetry of the strut (1) runs,
first leg portions (45, 46) extend from the middle vertex (43) in each case in the direction of the remaining vertices (42, 44), and
second leg portions (47, 48) extend from the remaining vertices (42, 44) to the first and second fastening portion (2, 3).

5. A strut according to Claim 4, wherein
the first leg portions (45, 46) are of such dimensions that the further fastening portion (6) located at the middle vertex (43) can be fastened on a front-end module of the vehicle, and the further fastening portions (5, 7) located at the remaining vertices (42, 44) can be fastened in the region of suspension-strut domes of the vehicle, and
the second leg portions (47, 48) are of such dimensions that the first fastening portion (2) and the second fastening portion (3) can in each case be fastened to a lateral supporting member of the vehicle body.

6. A strut according to Claim 5, wherein
additional fastening portions (8, 9) are located in the first leg portions (45, 46) between the middle vertex (43) and the remaining vertices (42, 44), by means of which additional portions the strut (1) can be fastened as intended to a reference strut which connects the lateral supporting members.

7. A strut according to one of Claims 2 to 5, wherein
the strut (1) is formed from a basic body (4) which defines the profile, into which the first and second fastening portion (2, 3) and the further fastening portions are integrated.

8. A strut according to Claim 6, wherein
the strut (1) is formed from a basic body (4) which defines the profile, into which the first and second fastening portion (2, 3), the further fastening portions and the additional fastening portions are integrated.

9. A strut according to Claim 7 or 8, wherein
the basic body (4) is formed in one part from a fibre/plastics-material composite material.

10. A front-end module for a vehicle, having
a strut (1) according to one of Claims 4 to 9, wherein
the strut (1) with the further fastening portion (6) located at the middle vertex (43) is fastened on a front cross-brace and can be fastened to points of the vehicle by means of the further fastening portions.

## Revendications

1. Barre (1) de fixation d'une carrosserie d'un véhicule, en particulier du volume moteur, cette barre (1) comprenant :
un premier segment de fixation (2) et un second segment de fixation (3) permettant de fixer la barre (1) sur la carrosserie du véhicule, et
un autre segment de fixation (5, 6) situé entre le premier et le second segments de fixation (2, 3) permettant une autre fixation de la barre (1) sur des points du véhicule,
**caractérisée en ce que**
la barre (1) a, entre le premier segment de fixation (2) et le second segment de fixation (3), à l'état monté, en projection dans un plan X-Y, un tracé avec au moins deux points de sommet (42, 43).

2. Barre conforme à la revendication 1, dans laquelle
les autres segments de fixation (5, 6) se trouvent respectivement au niveau de l'un des deux points de sommet (42, 43).

3. Barre conforme à la revendication 1 ou 2,
dont le tracé (1) comporte trois points de sommet (42, 43, 44) sur lesquels est respectivement situé l'un des autres segments de fixation (5, 6, 7).

4. Barre conforme à la revendication 3, dans laquelle
l'un des trois points de sommet (42, 43, 44) forme un point de sommet médian (43) au travers duquel s'étend l'axe de symétrie de la barre (1), des premiers segments de branche (45, 46) s'étendent respectivement du point de sommet médian (43) en direction des points de sommet restants (42, 44), et
des seconds segments de branche (47, 48) s'étendent des points de sommet restants (42, 44) vers le premier et le second segments de fixation (2, 3).

5. Barre conforme à la revendication 4, dans laquelle
les premiers segments de branche (45, 46) sont dimensionnés de sorte que l'autre segment de fixation (6) se trouvant au niveau du point de
sommet médian (43) puisse être fixé sur un module frontal du véhicule, et que les autres segments de fixation (5, 7) se trouvant au niveau des points de sommet restants (42, 44) puissent être fixés dans la zone du dôme d'amortisseur du véhicule, et
les seconds segments de branche (47, 48) sont dimensionnés de sorte que le premier segment de fixation (2) et le second segment de fixation (3) puissent respectivement être fixés sur une console de support latérale de la carrosserie du véhicule.

6. Barre conforme à la revendication 5, dans laquelle
dans les premiers segments de branche (45, 46), entre le point de sommet médian (43) et les points de sommet restants (42, 44) se trouvent des segments de fixation supplémentaires (8, 9) par l'intermédiaire desquels la barre (1) peut être fixée de manière adaptée à une barre de référence reliant les consoles de support latérales.

7. Barre conforme à l'une des revendications 2 à 5,
réalisée à partir d'un corps de base (4) fixant son tracé dans lequel sont intégrés le premier et le second segments de fixation (2, 3) et les autres segments de fixation.

8. Barre conforme à la revendication 6,
réalisée à partir d'un corps de base (4) fixant son tracé dans lequel sont intégrés le premier et le second segments de fixation (2, 3), les autres segments de fixation et le segment de fixation supplémentaire.

9. Barre conforme à la revendication 7 ou 8, dans laquelle
le corps de base (4) est réalisé en une seule partie en un matériau composite, matériau synthétique-fibres.

10. Module d'extrémité frontale d'un véhicule comprenant une barre (1) conforme à l'une des revendications 4 à 9, dans lequel
la barre (1) est fixée, avec l'autre segment de fixation (6) se trouvant au niveau du point de sommet médian (43) à une entretoise transversale avant, et peut être fixée par l'intermédiaire des autres segments de fixation sur des points du véhicule.
